# DEMANDE DE BREVET EUROPEEN

(11) **EP 3 882 119 A1**
(43) Date de publication de la demande: **22.09.2021**
(21) Numéro de dépôt: 21163541.2
(22) Date de dépôt: 18.03.2021
(51) Int. Cl.: B62M 3/08

(54) **PÉDALE POUR CYCLE**

(30) Priorité: 20.03.2020 FR 2002762
(71) Demandeur: SRAM LLC, County of Kent, Delaware 19904 (US)
(72) Inventeur: MARINIER, Benjamin, 38700 Corenc (FR); LIMANTON, Julien, 38500 Voiron (FR)
(74) Mandataire: Alatis

(57) **Abrégé**

La présente invention concerne une pédale de cycle comprenant un corps (1) ajouré qui comprend une paroi longitudinale avant (le), une paroi longitudinale arrière (1d), une poutre centrale (11) comportant un conduit transversal (11a) destiné à recevoir un arbre (2) fixé à une manivelle de pédalier et assurant la liaison entre une paroi latérale extérieure (1a) et une paroi latérale intérieure (1b) située du côté de la manivelle de pédalier, ledit corps (1) étant monté rotatif autour dudit arbre (2) au moyen d'au moins un roulement (21), caractérisée en ce que ladite poutre centrale (11) se prolonge vers l'extérieur par deux bras divergents (12a, 12b) délimitant entre eux un évidement latéral (10) ménagé dans ledit corps en regard dudit conduit (11a).

## Description

L'invention s'applique au domaine des cycles. En particulier, l'invention concerne une pédale de cycle et, notamment, une pédale destinée à des vélos tous terrains dits VTT.

Tous les cycles, sont équipés de pédales comprenant un corps ajouré monté de manière rotative sur un axe à roulements logé dans un conduit central du corps de la pédale. L'axe à roulements est ensuite monté sur une manivelle de pédalier. Certaines pédales présentent des faces élargies ayant une légère concavité qui est adaptée au profil de la voûte plantaire. Au moins l'une de ces faces est pourvue de reliefs favorisant l'accrochage et la retenue de la chaussure du cycliste.

Une telle pédale est décrite, notamment, dans la demande de brevet US 2014/0251077. Le corps de cette pédale présente une partie latérale en saillie pourvue d'un orifice situé dans le prolongement du conduit central du corps de la pédale. L'orifice permet d'introduire les organes de fixation de l'axe à roulements assurant la liaison rotative avec le corps de pédale. Toutefois, l'accès à ces organes par cet orifice reste difficile.

Du fait que les cycles pour VTT, ont vocation à rouler dans un environnement naturel, ils sont amenés à rencontrer sur leurs parcours de nombreux obstacles présents sur le terrain et à venir au contact de débris (gravier, herbes, feuilles, branchages, ...) qui sont susceptibles de se coincer dans les pédales et d'entraver leur rotation. Ce risque de blocage est d'autant plus important lorsque le corps de la pédale est ajouré et présente un orifice latéral étroit ménagé dans une partie en saillie, comme c'est le cas dans les modes de réalisation existants.

Le brevet CN 206255148U décrit une pédale dont l'axe est muni d'un unique roulement à billes de dimensions réduites qui permet de diminuer l'épaisseur du corps mais qui est manifestement insuffisant pour transmettre correctement les efforts mécaniques.

Toutefois, bien que la tendance soit à l'allégement des pédales de cycles et, en particulier, des cycles pour VTT, l'atteinte de cet objectif qui passe, notamment, par une réduction de l'épaisseur et une augmentation des surfaces ajourées, ne doit pas compromettre ni la rigidité, ni la résistance mécanique de la structure.

Dans ce contexte, l'invention vise à proposer une pédale de cycle qui permette de résoudre les problèmes techniques posés par l'art antérieur en facilitant l'accès aux organes de fixation de l'axe tout en offrant une structure plus fine et plus légère sans altération de sa rigidité et contribuant à une meilleure répartition des efforts.

Ce but est atteint, selon l'invention, au moyen d'une pédale de cycle comprenant un corps ajouré qui comprend une paroi longitudinale avant, une paroi longitudinale arrière, une poutre centrale comportant un conduit transversal destiné à recevoir un arbre fixé à une manivelle de pédalier et assurant la liaison entre une paroi latérale extérieure et une paroi latérale intérieure située du côté de la manivelle de pédalier, ledit corps étant monté rotatif autour dudit arbre au moyen d'au moins un roulement, caractérisée en ce que ladite poutre centrale se prolonge vers l'extérieur par deux bras divergents délimitant entre eux un évidement latéral ménagé dans ledit corps en regard dudit conduit ;

Selon une caractéristique avantageuse, les bras divergents portent, à leurs extrémités respectives, des pattes longitudinales dont les bords extérieurs s'étendent en vis-à-vis en ménageant une ouverture de l'évidement vers l'extérieur.

Selon une variante spécifique de réalisation, les bords extérieurs des pattes sont biseautés et parallèles entre eux.

De préférence, ces bords extérieurs biseautés présentent une inclinaison (a) vers le bas et vers l'arrière du corps comprise entre 4° et 35° par rapport à un axe (Y) perpendiculaire au plan du corps.

Selon une caractéristique particulière propre à cette variante, les pattes sont convergentes et s'étendent dans le prolongement de la paroi latérale extérieure du corps.

Selon une autre caractéristique, le corps comprend deux ailes indépendantes, respectivement, avant et arrière, séparées par ladite poutre centrale.

De préférence, le corps a une longueur comprise entre 100 mm et 120 mm et une largeur comprise entre 90 mm et 110 mm.

Selon une caractéristique particulière de la pédale de l'invention, l'évidement latéral du corps présente un profil sensiblement quadrilatère délimité, respectivement, par les deux bras et la face distale de la poutre.

Selon une autre variante, les deux bras s'étendent dans des plans perpendiculaires au corps et divergent selon un angle compris entre 10° et 45° relativement à l'axe du conduit.

Selon une autre caractéristique avantageuse, les faces supérieure et inférieure du corps ont un profil concave.

Selon un premier mode de réalisation, les parois latérales extérieure et intérieure du corps sont pourvues de cavités.

Selon un autre mode de réalisation, les parois latérales intérieure et extérieure du corps sont pourvues de cavités traversantes.

Selon d'autres caractéristiques de la pédale de l'invention, l'arbre est relié de manière rotative au corps par un double roulement à billes.

De préférence, ce double roulement à billes est monté à proximité de l'extrémité extérieure du conduit.

Selon encore un autre mode de réalisation de la pédale de l'invention, la poutre centrale a une section en parallélépipède et porte, sur au moins l'une de ses faces supérieure et inférieure, des moyens d'accrochage automatique d'une chaussure.

La pédale de l'invention comprend un corps avec des parties ajourées de dimensions importantes ce qui conduit à un allégement significatif de sa structure. Grâce au profil et à l'orientation spécifiques des bras de renfort, cet allégement ne compromet pas la rigidité d'ensemble et la bonne résistance mécanique et est compatible avec le profil concave des faces supérieure et inférieure qui est adapté à la voûte plantaire. La pédale de l'invention offre ainsi un bon compromis entre rigidité et allégement.

L'évidement latéral du corps de la pédale n'est pas fermé ce qui évite le coincement d'objets ou de débris dans la pédale. En effet, les bords biseautés des pattes facilitent le guidage et l'échappement vers l'arrière d'un éventuel objet qui se serait accroché fortuitement dans l'évidement de la pédale.

En outre, l'évidement latéral offre un accès aisé à l'arbre et aux roulements et simplifie les opérations de montage et de maintenance de la pédale.

Le corps de la pédale est formé de deux ailes indépendantes, respectivement, avant et arrière, uniquement reliées par la poutre centrale. Cette structure spécifique permet de découpler les efforts exercés sur l'avant et l'arrière de la pédale et d'optimiser le rendement mécanique. Grâce à la présence éventuelle d'un élément amortisseur, il permet également d'absorber les vibrations résultant des efforts brusques sur la pédale.

Enfin, l'arbre de la pédale est muni de deux roulements de plus faibles dimensions en lieu et place de l'unique roulement traditionnel et d'un palier plus fin afin de diminuer l'épaisseur de la pédale tout en conservant une bonne transmission d'énergie.

D'autres caractéristiques et avantages de l'invention ressortiront à la lecture de la description qui va suivre, en référence aux dessins annexés et détaillés ci-après.
[Fig. 1A] est une vue de l'arrière en perspective d'un mode de réalisation de la pédale gauche élargie de l'invention.
[Fig. 1B] est une vue de l'avant en perspective de la pédale la figure 1A.
[Fig. 2A] est une vue de côté de la pédale des figures 1A et 1B.
[Fig. 2B] est une vue de face de la pédale des figures 1A et 1B.
[Fig. 2C] est une vue de dessus de la pédale des figures 1A et 1B.
[Fig. 3] est une vue de face en coupe de la pédale élargie de l'invention.
[Fig. 4A] est une vue en perspective d'une première variante de réalisation de la pédale élargie de l'invention.
[Fig. 4B] est une vue en perspective d'une seconde variante de réalisation de la pédale élargie de l'invention.
[Fig. 4C] est une vue en perspective d'une troisième variante de réalisation de la pédale élargie de l'invention.

Pour plus de clarté, les éléments identiques ou similaires sont repérés par des signes de référence identiques dans la description et sur les figures.

Naturellement, les modes de mise en œuvre du procédé de l'invention illustrés par les figures présentées ci-dessus et décrites ci-après, ne sont donnés qu'à titre d'exemples non limitatifs. Il est explicitement prévu que l'on puisse proposer et combiner entre eux différents modes pour en proposer d'autres.

L'invention concerne le domaine de l'équipement des cycles de tout type mais est particulièrement adaptée aux VTT et, en particulier, aux pédales élargies destinées à ce type de cycles.

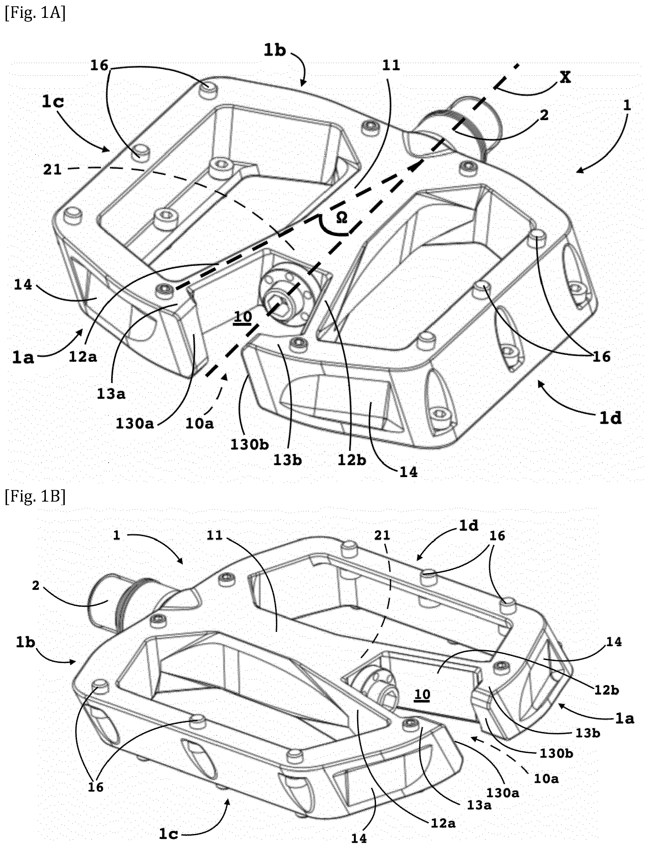

De manière traditionnelle et, comme illustré par les figures 1A et 1B qui représentent une pédale gauche, les pédales de cycles comprennent un corps 1 ajouré. Ce corps 1 comprend une poutre centrale 11 assurant la liaison entre une paroi latérale intérieure 1b située du côté de la manivelle de pédalier et une paroi latérale extérieure la située du côté opposé à la paroi latérale intérieure. Le corps 1 est également délimité par une paroi longitudinale avant 1c et une paroi longitudinale arrière 1d.

La poutre 11 a une section en parallélépipède. Selon des variantes de réalisation non représentées, cette poutre pourrait prendre d'autres formes et présenter, notamment, un profil de section circulaire ou curviligne.

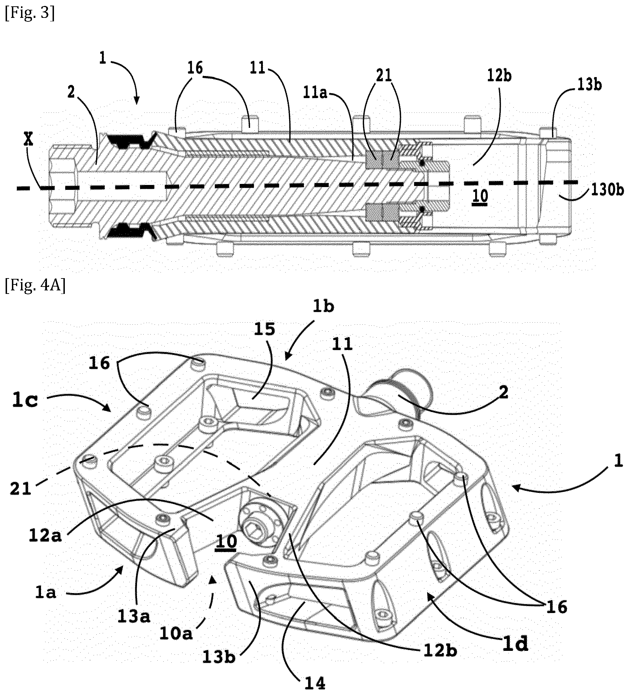

La poutre 11 est pourvue d'un conduit interne 11a (visible sur la figure 3), s'étendant transversalement et destiné à recevoir un arbre 2. L'arbre 2 est fixé, à son extrémité proximale et généralement par vissage, à une manivelle de pédalier (non représentée) et relié, à son extrémité distale, de manière rotative au corps 1 par au moins un roulement à billes 21 (visible en coupe sur la figure 3 et positionnée en traits pointillés sur les figures 1A et 1B).

Les faces supérieure et inférieure du corps 1 portent des picots 16 renforçant l'accrochage de la chaussure du cycliste sur la pédale et évitant le glissement de la semelle. Les faces supérieure et inférieure ont un profil concave adapté à la forme de la voûte plantaire.

Afin d'augmenter la surface d'appui du pied du cycliste et d'optimiser la puissance transmise au pédalier, il est connu d'augmenter la surface du corps 1 de la pédale. Cette augmentation se traduit, à la fois, par une extension longitudinale vers l'avant et vers l'arrière et par une extension latérale, dans le sens transversal, c'est-à-dire, selon l'axe de la poutre 11. Toutefois, cet élargissement ne doit pas alourdir la pédale, ni compromettre sa rigidité et sa résistance mécanique.

Dans ce contexte, l'invention propose de prolonger la poutre centrale 11 latéralement vers l'extérieur par deux bras divergents, respectivement, un bras avant 12a et un bras arrière 12b, délimitant entre eux un évidement latéral 10 ménagé dans le corps 1 en regard de l'extrémité extérieure du conduit 11a.

L'évidement 10 est donc délimité ici, respectivement, par les deux bras 12a, 12b et la face distale de la poutre 11 où débouche le conduit 11a. Cet évidement 10 sépare ainsi, le corps 1, en deux ailes indépendantes et symétriques, reliées au centre par la poutre 11 et disposées respectivement à l'avant et à l'arrière de cette poutre 11 et de la pédale dans sa position sensiblement horizontale de travail. L'évidement 10 ménage ainsi un espace libre en regard de l'extrémité extérieure de la poutre centrale 11 dont le profil présente sensiblement une forme de quadrilatère.

L'aile avant est composée d'un contour fermé formé de la poutre 11, du bras avant 12a, de la partie avant de la paroi latérale extérieure la, de la paroi longitudinale avant 1c et de la portion avant de la paroi latérale intérieure 1b. L'aile arrière est composée, quant à elle, d'un contour fermé formé de la poutre 11, du bras arrière 12b, de la partie arrière de la paroi latérale extérieure la, de la paroi longitudinale arrière 1d et de la portion arrière de la paroi latérale intérieure 1b.

Cette structure spécifique permet de découpler les efforts exercés sur l'avant et l'arrière du corps de la pédale ce qui assure une optimisation, à la fois, du rendement mécanique et de l'amortissement. Ainsi, une force appliquée sur la partie avant de la pédale ne perturbe pas la partie arrière de la pédale et inversement.

De préférence, les extrémités des bras 12a, 12b, qui se raccordent à la paroi latérale extérieure la du corps 1, portent des pattes longitudinales, respectivement avant 13a et arrière 13b. On ne sortira toutefois pas du cadre de l'invention si la pédale est dépourvue de pattes, l'évidement latéral étant alors le plus large possible et sa largeur correspondant à la distance entre l'extrémité du bras avant 12a et l'extrémité du bras arrière 12b.

Lorsque les pattes sont présentes, les bords extérieurs respectifs 130a, 130b des pattes 13a, 13b s'étendent en vis-à-vis de façon à fermer partiellement l'évidement 10 vers l'extérieur en libérant une ouverture intercalaire 10a. La longueur des pattes sera choisie de telle sorte que la rigidité de la pédale en flexion soit suffisante.

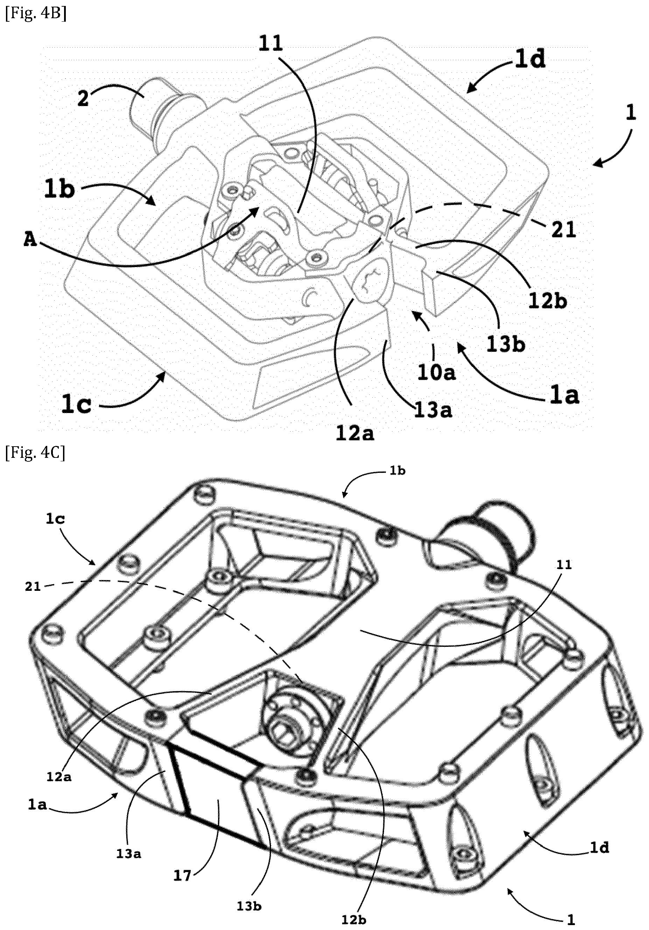

Le cas échéant, et selon une variante de réalisation représentée sur la figure 4C, l'ouverture intercalaire 10a peut être comblée par un élément 17 améliorant l'amortissement. Cet élément amortisseur 17 est réalisé, par exemple, sous forme d'une languette en matériau élastomère qui est fixée de manière permanente ou amovible sur les bords libres des pattes 13a, 13b. L'élément 17 travaille en compression et/ou en flexion et se déforme de manière élastique sous l'effet de la force d'appui du pied du cycliste sur l'aile avant ou l'aile arrière du corps 1 de la pédale.

Dans le cas où l'élément amortisseur 17 est amovible, le cycliste peut le remplacer par un autre élément amortisseur de rigidité différente en fonction du comportement mécanique recherché pour la pédale. Cet élément 17 peut être interchangeable et, en cas d'usure, être remplacé par un élément de rigidité similaire.

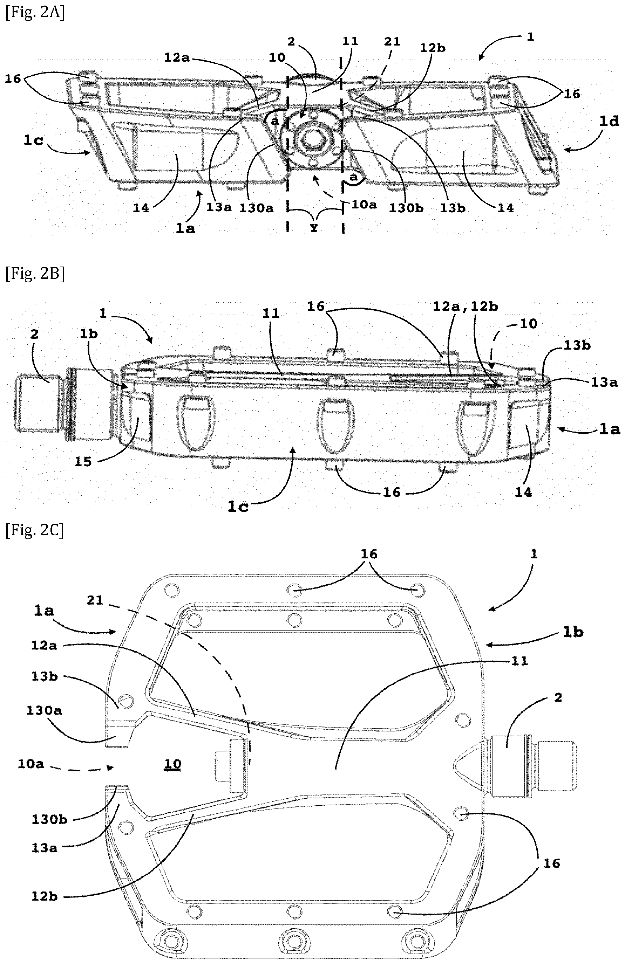

Selon une variante spécifique de réalisation de la pédale de l'invention illustrée par la figure 2A, les bords extérieurs 130a, 130b des pattes 13a, 13b sont biseautés, parallèles entre eux et peuvent, de préférence, présenter une inclinaison vers le bas et vers l'arrière du corps 1. De préférence, l'inclinaison (a) de ces bords extérieurs biseautés est comprise entre 4° et 35° et, de préférence comprise entre 5° et 10° par rapport à un axe Y perpendiculaire au plan du corps 1. Dans une autre variante non représentée, les bords extérieurs des pattes 13a, 13b peuvent être parallèles et verticaux.

Les deux bras 12a, 12b s'étendent dans des plans perpendiculaires au corps 1 et divergent selon un angle (Ω) compris entre 10° et 45° et, de préférence de compris entre 10° et 20° relativement à l'axe commun X, à la poutre 11 et au conduit 11a, comme illustré par les figures 1A et 2C. L'orientation et les dimensions de ces bras sont optimisées pour assurer le renfort du corps 1.

Les pattes 13a, 13b s'étendent, quant à elles, dans le prolongement des faces latérales extérieures la du corps 1. Comme illustré par les figures, les pattes 13a, 13b convergent l'une vers l'autre sans se rejoindre et délimitent, entre leurs bords libres respectifs, l'ouverture 10a.

La plus petite longueur des pattes est comprise entre 4mm et 7mm et, de préférence comprise entre 5mm et 6mm. La plus grande longueur des pattes est comprise entre 9mm et 12mm et, de préférence comprise entre 10mm et 11mm.

Les pattes 13a, 13b sont orientées en direction de l'ouverture 10a de l'évidement 10. Il en résulte que le profil de la paroi latérale extérieure la du corps 1 (dont les portions avant et arrière sont légèrement divergentes entre les ailes avant et arrière, comme illustré par la figure 2C), présente donc des points d'inflexion dans les zones de raccordement respectives avec les bras 12a, 12b et les pattes 13a, 13b convergentes du fait des changements relatifs d'orientation.

Dans encore une autre variante non représentée, les pattes ne sont plus alignées et coplanaires mais sont orientées vers l'intérieur de l'évidement 10 en s'étendant selon des plans sécants perpendiculaires au corps et délimitant un angle intercalaire.

Grâce au profil spécifique en biseau du bord extérieur 130a, 130b des pattes 13a, 13a, l'invention permet d'éviter l'accrochage et le coincement d'objets ou de débris dans la pédale en assurant leur guidage vers l'extérieur de l'évidement 10 et en facilitant ainsi leur échappement lorsque le vélo avance. Ce guidage est aussi renforcé par les orientations de la paroi latérale extérieure la sur les deux ailes avant et arrière du corps 1.

En outre, la présence de l'évidement 10, avec son ouverture axiale 10a vers l'extérieur entre les pattes 13a, 13b, permet de dégager un accès aisé aux organes de fixation de l'arbre 2 et aux roulements 21, ce qui simplifie le montage et la maintenance de la pédale.

De préférence, dans un objectif d'allégement de la structure de la pédale, les parois latérales extérieure la et intérieure 1b du corps 1 sont pourvues de cavités respectivement 14, 15. Selon différentes variantes, ces cavités sont réalisées, soit sur les faces latérales extérieures de la paroi latérale extérieure la et/ou de la paroi latérale intérieure 1b (comme illustré par les figures), soit sur les faces intérieures en regard de ces parois latérales 1a, 1b. Il serait aussi possible de prévoir que ces cavités soient réalisées sur une face intérieure de l'une des parois latérales et sur une face extérieure de l'autre paroi latérale. Selon encore d'autres variantes, ces cavités pourraient aussi être réalisées sur les parois longitudinale avant 1c et arrière 1d.

On comprendra ainsi que, selon l'invention, toutes les combinaisons sont possibles et que ces cavités 14, 15 peuvent aussi être borgnes ou traversantes pour augmenter encore l'allégement de la structure de la pédale.

De préférence, au moins l'un des bords longitudinaux de ces cavités 14, 15 est parallèle aux bords extérieurs 130a, 130b (biseautés ou non) des pattes 13a, 13b, de même que la face avant de la paroi longitudinale avant 1c et la face arrière de la paroi longitudinale arrière 1d du corps 1, comme illustré par les modes de réalisation représentés sur les figures.

Le corps 1 de la pédale peut être réalisé avec un matériau tel que de l'aluminium ou du carbone ou en un matériau composite ou encore en matière plastique, chargée ou non de fibres naturelles ou artificielles offrant la possibilité d'une fabrication par moulage en une seule pièce tout en présentant une rigidité et une résistance mécanique satisfaisantes. Le cas échéant, le corps 1 peut être aussi réalisé en deux ou plusieurs pièces destinées à être assemblées par tout moyen traditionnel.

Dans un mode de réalisation préférentiel, le corps a une longueur, entre ses extrémités avant et arrière, comprise entre 100 mm et 120 mm et, de préférence, entre 105 mm et 115 mm et une largeur, entre les faces extérieures respectives des parois latérales extérieure la et intérieure 1b, comprise entre 90 mm et 110 mm et, de préférence, entre 95 mm et 105 m. Comme cela est clairement apparent sur les figures, cette pédale élargie présente une longueur supérieure à sa largeur.

L'épaisseur des bras 12a, 12b est comprise entre 3 mm et 7 mm et, de préférence, entre 4 mm et 5 mm de 4,6 mm. La hauteur de ces bras est, quant à elle, comprise entre 13 mm et 20 mm et, de préférence, entre 15 mm et 17 mm tandis que leur longueur est comprise entre 25 mm et 30 mm et, de préférence, entre 26 mm et 28 mm.

La poutre 11 a alors une largeur comprise entre 13 mm et 20 mm et, de préférence, entre 15 mm et 17 mm et une hauteur comprise entre 13 mm et 20 mm et, de préférence, entre 15 mm et 17 mm. La poutre 11a une longueur comprise entre 60 mm et 80mm et cette longueur est comprise entre la moitié et les deux tiers de la largeur de la pédale.

L'invention a également pour but de proposer une modification de la liaison rotative entre l'arbre 2 et le corps 1 de la pédale en remplaçant le roulement à billes traditionnel par un double roulement à billes 21 (en traits pointillés notamment sur les figures 1A, 1B et en trait plein sur la figure 3) de plus faibles dimensions, ce qui permet de réduire l'épaisseur de la pédale tout en conservant une bonne transmission d'énergie par une meilleure répartition des efforts.

De préférence, ce double roulement à billes 21 est monté dans une cage disposée à proximité de l'extrémité extérieure du conduit 11a, comme illustré par la figure 3. L'étanchéité est assurée par un cache extérieur de protection situé du côté extérieur et par des joints montés des deux côtés du conduit 11a.

Dans une autre variante de réalisation illustrée par la figure 4B, la poutre centrale 11 porte, sur au moins l'une de ses faces supérieure et inférieure, des moyens d'accrochage automatique A d'une chaussure, par exemple, pour VTT, tels que décrits par exemple, dans le FR 2768391. Il est possible de prévoir, sans sortir du cadre de l'invention que ces moyens d'accrochage automatique A soient montés de façon amovible sur la poutre 11.

## Revendications

1. Pédale de cycle comprenant un corps (1) ajouré qui comprend une paroi longitudinale avant (1c), une paroi longitudinale arrière (1d), une poutre centrale (11) comportant un conduit transversal (11a) destiné à recevoir un arbre (2) fixé à une manivelle de pédalier et assurant la liaison entre une paroi latérale extérieure (la) et une paroi latérale intérieure (1b) située du côté de la manivelle de pédalier, ledit corps (1) étant monté rotatif autour dudit arbre (2) au moyen d'au moins un roulement (21), **caractérisée en ce que** ladite poutre centrale (11) se prolonge vers l'extérieur par deux bras divergents (12a, 12b) délimitant entre eux un évidement latéral (10) ménagé dans ledit corps en regard dudit conduit (11a).

2. Pédale selon la revendication 1, **caractérisée en ce que** lesdits bras divergents (12a, 12b) portent, à leurs extrémités respectives, des pattes longitudinales (13a, 13b) dont les bords extérieurs (130a, 130b) s'étendent en vis-à-vis en ménageant une ouverture (10a) de l'évidement (10) vers l'extérieur.

3. Pédale selon la revendication précédente, **caractérisée en ce que** les bords extérieurs (130a, 130b) desdites pattes (13a, 13b) sont biseautés et parallèles entre eux.

4. Pédale selon la revendication précédente, **caractérisée en ce que** les bords extérieurs biseautés desdites pattes (13a, 13b) présentent une inclinaison (a) vers le bas et vers l'arrière du corps (1) comprise entre 4° et 35° par rapport à un axe (Y) perpendiculaire au plan du corps (1).

5. Pédale selon l'une des revendications 2 à 4, **caractérisée en ce que** lesdites pattes (13a, 13b) sont convergentes et s'étendent dans le prolongement de la paroi latérale extérieure (la) dudit corps (1).

6. Pédale selon l'une des revendications précédentes, **caractérisée en ce que** le corps (1) comprend deux ailes indépendantes, respectivement, avant et arrière, séparées par ladite poutre centrale (11).

7. Pédale selon l'une des revendications précédentes, **caractérisée en ce que** ledit corps a une longueur comprise entre 100 mm et 120 mm et une largeur comprise entre 90 mm et 110 mm.

8. Pédale selon l'une des revendications précédentes, **caractérisée en ce que** ledit évidement (10) présente un profil sensiblement quadrilatère délimité, respectivement, par les deux bras (12a, 12b) et la face distale de la poutre (11).

9. Pédale selon l'une des revendications précédentes, **caractérisée en ce que** les deux bras (12a, 12b) s'étendent dans des plans perpendiculaires au corps (1) et divergent selon un angle (Ω) compris entre 10° et 45° relativement à l'axe (X) du conduit (lia).

10. Pédale selon l'une des revendications précédentes, **caractérisée en ce que** les faces supérieure et inférieure du corps (1) ont un profil concave.

11. Pédale selon l'une des revendications précédentes, **caractérisée en ce que** lesdites pattes (13a, 13b) s'étendent dans le prolongement de la paroi latérale extérieure (la) dudit corps (1).

12. Pédale selon l'une des revendications précédentes, **caractérisée en ce que** les parois latérales extérieure (la) et intérieure (1b) dudit corps (1) sont pourvues de cavités (14, 15).

13. Pédale selon l'une des revendications précédentes, **caractérisée en ce que** les parois latérales extérieure (la) et intérieure (1b) dudit corps sont pourvues de cavités (14, 15) traversantes.

14. Pédale selon l'une des revendications précédentes, **caractérisée en ce que** ledit arbre (2) est relié de manière rotative audit corps (1) par un double roulement à billes (21).

15. Pédale selon la revendication précédente, **caractérisée en ce que** le double roulement à billes (21) est monté à proximité de l'extrémité extérieure dudit conduit (lia).

16. Pédale selon l'une des revendications précédentes, **caractérisée en ce que** la poutre centrale (11) a une section en parallélépipède et porte, sur au moins l'une de ses faces supérieure et inférieure, des moyens d'accrochage automatique (A) d'une chaussure.
